# EUROPEAN PATENT APPLICATION

(11) **EP 4 521 800 A1**
(43) Date of publication of application: **12.03.2025**
(21) Application number: 22940621.0
(22) Date of filing: 06.05.2022
(51) Int. Cl.: H04W 24/02, H04W 24/08, H04W 76/10

(54) **COMMUNICATION METHOD AND COMMUNICATION APPARATUS FOR SENSING MEASUREMENT ESTABLISHMENT**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/091201
(87) International publication number: WO 2023/212927

(57) **Abstract**

A communication method and a communication apparatus for sensing measurement establishment. The communication method comprises: determining a wireless frame, wherein the wireless frame comprises sensing measurement parameter information set by an access point device; and sending the wireless frame.

## Description

### TECHNICAL FIELD

The present disclosure relates to a field of wireless communication technologies, and more specifically to a communication method and a communication apparatus for a sensing measurement setup.

### BACKGROUND

Wireless local area networks (WLANs) are characterized by flexibility, mobility and low cost. With the development of communication technologies and the growth of user demands, the research on the application of WLANs is gradually deepened. For example, WLAN sensing is currently being studied, and its main application scenarios are: location discovery in dense environments (home or business environments), proximity detection, presence detection, etc.

### SUMMARY

Various embodiments of the present disclosure provide the following technical solutions.

An example embodiment based on the present disclosure provides a communication method for a sensing measurement setup. The communication method can be performed by an access point device, and including: determining a radio frame, in which the radio frame includes sensing measurement parameter information set by the access point device; transmitting the radio frame.

An example embodiment based on the present disclosure provides a communication method for a sensing measurement setup. The communication method can be performed by a station device, and including: receiving a radio frame from an access point device, in which the radio frame includes sensing measurement parameter information set by the access point device; transmitting a response frame based on the radio frame.

An example embodiment based on the present disclosure provides a communication apparatus. The communication apparatus can be applied to an access point device, and including: a processing module, configured to determine a radio frame, in which the radio frame includes sensing measurement parameter information set by the access point device; a transceiving module, configured to transmit the radio frame.

An example embodiment based on the present disclosure provides a communication apparatus. The communication apparatus can be applied to a station device, and including: a transceiving module, configured to receive a radio frame from an access point device, in which the radio frame includes sensing measurement parameter information set by the access point device; a processing module, configured to control transmitting a response frame based on the radio frame.

An example embodiment based on the present disclosure provides an electronic apparatus. The electronic apparatus includes: a memory, a processor, and a computer program stored on the memory and runnable on the processor. The processor executes the computer program to implement the above method.

An example embodiment based on the present disclosure provides a computer-readable storage medium. The computer-readable storage medium has stored therein a computer program. The processor executes the computer program to implement the above method.

The technical solution provided by the example embodiments of the present disclosure improves the signaling mechanism during the sensing measurement setup and makes it applicable to WLAN sensing measurement.

### BRIEF DESCRIPTION OF THE DRAWINGS

The above and other features of embodiments of the present disclosure will become more apparent by describing the example embodiment of the present disclosure in detail with reference to the drawings, in which:
FIG. 1 is an exemplary way of showing WLAN sensing;
FIG. 2 is a flowchart showing a communication method according to an example embodiment;
FIG. 3 is a flowchart showing another communication method according to an example embodiment;
FIG. 4 is a block diagram showing a communication device according to an example embodiment.

### DETAILED DESCRIPTION

The following description with reference to the drawings is provided to assist in a comprehensive understanding of various embodiments of the present disclosure defined by the appended claims and their equivalents. The various embodiments of the present disclosure include various specific details, but these specific details are considered to be exemplary only. In addition, descriptions of well-known technologies, functions, and constructions can be omitted for the sake of clarity and brevity.

The terms and expressions used in the present disclosure are not limited to their written meaning and are used solely by the inventor to enable a clear and consistent understanding of the present disclosure. Therefore, for those skilled in the art, descriptions of the various embodiments of the present disclosure are provided for illustrative purposes only and not for limiting purposes.

It should be understood that the singular forms "a", "an", "said" and "the" used here can also include the plural forms unless the context clearly states otherwise. It should be further understood that the term "comprising/including" as used in the present disclosure refers to the presence of the described features, integers, steps, operations, elements, and/or components, but does not preclude the presence or addition of one or more other features, integers, steps, operations, elements, components, and/or groups of them.

It will be understood that although the terms "first", "second", and the like herein can be used to describe various elements, these elements should not be restricted by these terms. These terms are used only to distinguish one element from another. Thus, without departing from the teaching of example embodiments, a first element discussed below may be called a second element.

It should be understood that when a component is referred to as being "connected" or "coupled" to another component, it may be directly connected or coupled to another component, or there may be an intermediate component. In addition, the term "connection" or "coupling" used here may include a wireless connection or a wireless coupling. The term "and/or" or the expression "at least one of ......" used here includes any and all combinations of one or more related listed items.

Unless defined otherwise, all terms used herein, both technical and scientific, have the same meaning as would be generally understood by a person of ordinary skill in the art to which the present disclosure belongs.

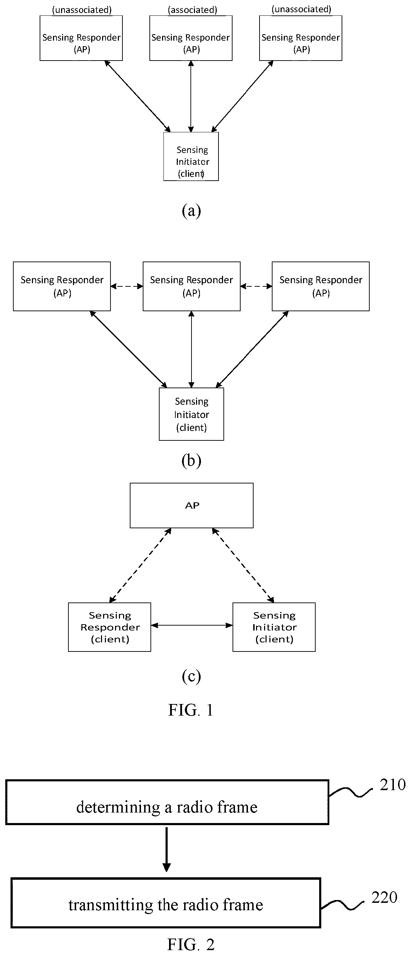

FIG. 1 is an exemplary way of showing WLAN sensing.

The WLAN sensing process can be as follows: an initiator initiates WLAN sensing (for example, initiating a WLAN sensing session), and multiple responders may be present to respond to the WLAN sensing. The specific possible ways can be shown in (a), (b), and (c) of FIG. 1.

Referring to FIG. 1(a), when a WLAN sensing initiator (for example, a client) initiates a WLAN sensing, multiple associated or unassociated WLAN sensing responders (for example, three access points (APs)) can respond to the WLAN sensing. "Associated" here can mean that an associated connection is established between the initiator and the responder for communication, and "unassociated" can mean that no associated connection is established between the initiator and the responder for communication.

As an example, the client may include, but is not limited to: cellular phones, smart phones, wearables, computers, personal digital assistants (PDAs), personal communication system (PCS) devices, personal information managers (PIMs), personal navigation devices (PNDs), global positioning systems, multimedia devices, Internet of Things (IoTs) devices, etc.

The AP can be a wireless switch for a wireless network or an access point device for a wireless network. The AP may include software applications and/or circuitry to enable other types of nodes in the wireless network to communicate with both an exterior and interior of the wireless network through the AP. As an example, the AP can be a terminal device or network device equipped with a Wi-Fi (wireless fidelity) chip.

FIG. 1(b) is similar to FIG. 1(a), but in FIG. 1(b), individual responders (APs) can communicate with each other.

Referring to FIG. 1(c), both a WLAN sensing initiator and a WLAN sensing responder can be clients, and the two can communicate with each other by connecting to the same AP.

Although (a), (b), and (c) in FIG. 1 show that the client acts as the initiator and the AP acts as the responder, the present disclosure is not limited thereto. For example, in various embodiments of the present disclosure, an AP may act as the initiator and a client may act as the responder. In addition, in various embodiments of the present disclosure, a client may also be referred to as a non-AP station (non-APSTA), referred to simply as a "station (STA)". In addition, the number of initiators and responders is not limited to that as shown in (a), (b), and (c) in FIG. 1.

As an illustrative embodiment, a WLAN sensing process can include establishing a WLAN sensing session, establishing a WLAN sensing measurement, and terminating a WLAN sensing measurement. During WLAN sensing session setup, operational parameters associated with the sensing session can be determined and exchanged between devices. In WLAN sensing measurement setup, sensing measurement and/or reporting of measurement results can be performed. In sensing measurement, one of AP and STA may act as a transmitter to transmit a message frame (e.g., empty packet: a null data packet (NDP) frame) for a sensing measurement, the other may act as a receiver to receive a message frame (for example, an NDP frame) for a sensing measurement, so as to complete a specific sensing measurement instance and obtain a measurement result. In WLAN sensing measurement termination, the device stops performing the measurement and terminates the sensing session. It will be understood that the WLAN sensing process described above is only exemplary and some of the stages can be omitted, or some of the stages can be merged or split.

In addition, in the technology of WLAN sensing, a trigger-based (TB) sensing measurement and a non-trigger-based (Non-TB) sensing measurement are proposed. In the TB sensing measurement, an AP can be the initiator. For example, in WLAN sensing measurement setup, the AP can be the initiator to initiate the sensing measurement setup, and the STA can be the responder to respond to the sensing measurement setup initiated by the AP. In the Non-TB sensing measurement, the station (STA) can be the initiator. For example, the station transmits a null data packet announcement (NDPA) frame to the AP for sensing measurement, which is uplink or downlink sensing measurement, or both.

In conventional TB and Non-TB sensing measurements, the AP or STA initiates the sensing measurement as the initiator, which can be the transmitter or receiver of the message frame (e.g., NDP frame) for the sensing measurement. In addition, when the AP initiates the sensing measurement between responders, responder to responder, the AP may be neither the receiver nor the transmitter of the NDP frame, or the AP can be the receiver of an NDP frame (the same as Non-TB sensing measurements and uplink sensing measurements in Non-TB sensing measurements), or the AP may be required to receive a sensing measurement report. However, the current WLAN sensing measurement mechanism lacks the corresponding signaling during the sensing measurement setup for explicit definition.

In view of this, an idea based on the embodiment of the present disclosure provides a communication method and a communication apparatus for a sensing measurement setup.

FIG. 2 is a flowchart showing a communication method according to an example embodiment. The communication method shown in FIG. 2 can be performed by an access point device (AP). In other words, the communication method shown in FIG. 2 can be performed by a WLAN sensing initiator (AP).

Referring to FIG. 2, in step 210, a radio frame is determined, in which the radio frame can include sensing measurement parameter information set by the access point device.

In embodiments of the present disclosure, the radio frame may be determined in a variety of ways. For example, the radio frame may be generated or configured based on at least one of the following conditions: a channel state, a network condition, a load condition, hardware capability of a transmitting/receiving device, a service type, or relevant protocol provisions, and there are no specific restrictions on this in embodiments of the present disclosure. In the embodiment of the present disclosure, the radio frame may also be obtained from an external device, and there is no specific restriction on this in embodiments of the present disclosure. For example, as a non-limiting embodiment, the radio frame may be determined based on sensing operation parameter capability information exchanged during a sensing measurement session setup performed before the sensing measurement setup and supported by the initiator and the receiver. For example, various sensing measurement parameter information in the radio frame is determined.

According to embodiments of the present disclosure, the radio frame may be of various types. For example, but not limited to, the radio frame may be a sensing measurement setup request frame. In other words, the communication method shown in FIG. 2 can be the communication method performed during the sensing measurement setup.

In step 220, the radio frame can be transmitted. For example, the initiator AP may transmit the radio frame determined in step 210 to the responder STA, allowing the responder STA to obtain sensing measurement parameter information set by the AP.

According to various embodiments of the present disclosure, the radio frame may include various sensing measurement parameter information set by the AP.

In an embodiment of the present disclosure, a communication method for a sensing measurement setup is provided. The sensing measurement setup request frame may include a first identification bit, in which the first identification bit is used to indicate that the access point device initiates the sensing measurement setup between responders, in which initiating the sensing measurement setup between responders may mean that a station device serving as a responder transmits a message frame for the sensing measurement. For example, the message frame for the sensing measurement may be an NDP frame, and for example, the NDP frame may include working parameters required to perform the WLAN sensing measurement, such as the number of spatial streams, the working bandwidth of the NDP frame, a long training field (LTF), a packet extension field (PE), etc. However, the present disclosure is not limited to this, and other frames carrying working parameters required to perform the WLAN sensing measurement are also feasible.

As a non-limiting embodiment, the AP may utilize at least one bit to set the first identification bit. For example, when the first identification bit is set to a specific value (e.g., but not limited to "1"), the first identification bit may indicate that the AP initiates the sensing measurement setup between responders. That is, the AP can set the first identification bit to a specific value in the radio frame (for example, the sensing measurement setup request frame) to indicate that in the sensing measurement setup initiated by the AP, the responder (STA) acts as the transmitter to transmit the NDP frame to perform a specific sensing measurement instance.

According to the embodiment described in FIG. 1, in the TB sensing measurement, the AP as the initiator initiates the sensing measurement setup. In this embodiment, the AP can set the first identification bit in the radio frame (for example, the sensing measurement setup request frame) to indicate that the AP further initiates the sensing measurement setup between responders in the TB sensing measurement.

In an embodiment of the present disclosure, a communication method for a sensing measurement setup is provided. The sensing measurement setup request frame may include a sensing receiver identification bit, in which in a case that the sensing receiver identification bit is set to a first value (e.g., but not limited to "1"), it is indicated that the access point device as a receiver receives a message frame (e.g., NDP frame) for the sensing measurement. That is, an AP can set a sensing receiver identification bit in the radio frame (for example, the sensing measurement setup request frame) to indicate that the AP can receive an NDP frame transmit by one of the responders (STAs) during an initiated sensing measurement setup.

In an embodiment of the present disclosure, a communication method for a sensing measurement setup is provided, in which the sensing measurement report identification bit may be included in a sensing measurement setup request frame. The sensing measurement report identification bit indicates whether the AP receives a report of the sensing measurement result. For example, in a case that the sensing measurement report identification bit is set to a second value (e.g., but not limited to "1"), it is indicated that the access point device receives a sensing measurement report; in a case that the sensing measurement report identification bit is set to a third value (e.g., but not limited to "0"), it is indicated that the access point device dose not receive a sensing measurement report. For example, when the AP sets the sensing measurement report identification bit to the AP to receive the sensing measurement report in the radio frame (for example, the sensing measurement setup request frame), it is indicated that the AP can receive a NDP sensing measurement report between responders, and during the sensing measurement reporting process, the AP can initiate the sensing measurement reporting request frame or the responder can initiate the sensing measurement report directly so that the AP can obtain the sensing measurement result.

In an embodiment of the present disclosure, a communication method for a sensing measurement setup is provided, in which the sensing measurement setup request frame may include a second identification bit, and the second identification bit is used to indicate whether a station device is a transmitter or a receiver in the sensing measurement. A station device (STA) can be a responder to a sensing measurement setup with an AP, and the AP can use a second identification bit in a radio frame (for example, the sensing measurement setup request frame) to indicate whether the STA is the transmitter or receiver of a message frame (for example, the NDP frame) for the sensing measurement.

For example, the second identification bit can have one or more bits to indicate whether one or more STAs are the transmitter or receiver of the NDP frame. In one sensing measurement process (also known as a sensing measurement instance), there can be only one transmitter of the NDP frame, but there can be one or more receivers of the NDP frame.

As an optional embodiment, the sensing measurement setup request frame may also include an identifier for an STA, for example, the STA may be identified by an AID or a UID. The AID may indicate the identifier for an STA that has established associated communication with an AP, and the UID may indicate the identifier for an STA that has not established associated communication with an AP. In addition, optionally, the identifier AID or UID of the STA may be included in the second identification bit. For example, part of the second identification bit may be used to indicate the AID or UID, and the other part of the second identification bit may be used to indicate whether the corresponding STA is the transmitter or receiver of the NDP frame. However, the present disclosure is not limited to this, and the identifier AID or UID of the STA may be identified separately from the second identification bit in a radio frame (for example, the sensing measurement setup request frame), but may correspond to the second identification bit in a one-to-one manner.

In an embodiment of the present disclosure, a communication method for a sensing measurement setup is provided, in which a sensing measurement setup identifier may be included in a sensing measurement setup request frame. The sensing measurement setup identifier is used to indicate the sensing measurement setup process initiated by an AP. Optionally, the AP may indicate whether the STA is involved in the sensing measurement as a transmitter or receiver during the sensing measurement setup process corresponding to the sensing measurement setup identifier. For example, in a case that the station device is a transmitter, it is indicated that the station device transmits a message frame (for example, an NDP frame) for the sensing measurement during a sensing measurement instance corresponding to the sensing measurement setup identifier. For example, in a case that the station device is a receiver, it is indicated that the station device receives a message frame (for example, an NDP frame) for the sensing measurement during a sensing measurement instance corresponding to the sensing measurement setup identifier.

In the above embodiments, various sensing measurement parameter information set by the AP and included in the radio frame (e.g., the sensing measurement setup request frame) are described separately. It will be appreciated that various combinations of the contents of the above-described embodiments may be made. In addition, the contents in the above embodiments are only exemplary, and the radio frame may also include various other information.

For example, in a communication method for a sensing measurement setup provided in the present disclosure, various sensing measurement parameter information set by the AP may be included in a radio frame (e.g., a sensing measurement setup request frame) in the format of a sensing measurement parameter information element (Sensing Measurement Parameters element). As a non-limiting embodiment, the format of the sensing measurement parameter information element may be as shown in Table 1 below.

**Table 1. Format of sensing measurement parameter information element**

| | | | | | | |
|---|---|---|---|---|---|---|
| Element ID | Length | Element ID Extension | Sensing Measurement Parameters | STA receiver/transmitter | Sensing Measurement setup ID | ...... |

In Table 1, the element identifier (Element ID) may indicate the sensing measurement parameter information element, the length (Length) may indicate the length of the sensing measurement parameter information element, and the element identifier extension (Element ID Extension) may indicate the extension of the sensing measurement parameter information element.

In addition, the STA transmitter/receiver may correspond to the second identification bit described with reference to the above embodiments, and is used to indicate whether the STA is a transmitter or a receiver in the sensing measurement process. The sensing measurement setup identifier (Sensing Measurement setup ID) may correspond to the sensing measurement setup identifier described with reference to the above embodiments. Although only one STA transmitter/receiver and one sensing measurement setup identifier (Sensing Measurement setup ID) are shown in Table 1, the present disclosure is not limited to this, and more STA transmitters/receivers and more sensing measurement setup identifiers (Sensing Measurement setup IDs) may be included in Table 1.

In addition, the sensing measurement parameter field (Sensing Measurement Parameters) in Table 1 may have a format as shown in Table 2 below.

**Table 2. Format of Sensing Measurement Parameter Field**

| | | | | | |
|---|---|---|---|---|---|
| Sensing Transmitter | Sensing Receiver | Measurement Report Type | Responder to Responder Measurement Setup | Measurement Report | ...... |

The Sensing Transmitter in Table 2 may indicate whether the AP acts as a transmitter to send a message frame (e.g., an NDP frame) for sensing measurement. For example, when the Sensing Transmitter is set to a specific value (for example, but not limited to "1"), the AP can send an NDP frame as a transmitter in the initiated sensing measurement setup; and when the Sensing Transmitter is set to another specific value (for example, but not limited to "0"), the AP does not send an NDP frame as a transmitter in the initiated sensing measurement setup.

The Sensing Receiver in Table 2 may correspond to the sensing receiver identification bit described with reference to the above embodiments, and is used to indicate whether the AP receives a message frame (e.g., an NDP frame) for sensing measurement as a receiver. For example, when the Sensing Receiver is set to a specific value (for example, but not limited to "1"), the AP can receive an NDP frame as a receiver in the initiated sensing measurement setup; and when the Sensing Receiver is set to another specific value (for example, but not limited to "0" or a reserved bit), the AP does not receive an NDP frame as a receiver in the initiated sensing measurement setup.

The Measurement Report Type in Table 2 may be used to indicate the type of the measurement result of a sensing measurement instance. For example, but not limited to, the Measurement Report Type may be set to channel state information (CSI), that is, the AP may receive CSI as a measurement result. If the AP participates in a sensing measurement instance as a receiver of an NDP frame, the Measurement Report Type may be set to a reserved bit.

The responder to responder sensing measurement setup (Responder to Responder Measurement Setup) in Table 2 may correspond to the first identification bit described with reference to the above embodiments, and is used to indicate whether the AP initiates the responder to responder sensing measurement setup. For example, when the Responder to Responder Measurement Setup is set to, for example, but not limited to, "1", it can be indicated that the AP initiates a responder to responder sensing measurement setup; and when the Responder to Responder Measurement Setup is set to, for example, but not limited to, "0", it can be indicated that the AP does not initiate a responder to responder sensing measurement setup.

The sensing measurement report (Measurement Report) in Table 2 may correspond to the sensing measurement report identification bit described with reference to the above embodiments, and is used to indicate whether the AP receives the sensing measurement report from the responder STA. For example, when the sensing measurement report (Measurement Report) is set to, for example, but not limited to, "1", the AP receives the sensing measurement report; and when the sensing measurement report (Measurement Report) is set to, for example, but not limited to, "0", the AP does not receive the sensing measurement report.

Although various sensing measurement parameter information that a radio frame (e.g., a sensing measurement setup request frame) may include is described with reference to Tables 1 and 2, it does not mean that the radio frame (e.g., a sensing measurement setup request frame) must include all the contents shown in Tables 1 and 2. For example, the AP may omit some of the contents according to information such as the hardware capabilities of the AP and the STA, or may include more other contents.

According to an embodiment of the present disclosure, the AP sends a sensing measurement setup request frame to the STA in the sensing measurement setup process, in which the STA is a responder. In the sensing measurement setup request frame, at least one identification bit may be carried to indicate that the AP initiates a responder to responder measurement instance setup process. For example, the AP may set the "Sensing Receiver" bit in its sensing measurement parameter information field (for example, Table 2) to "1", indicating that the AP receives an NDP frame sent by one of the responders (STA) in the measurement instance.

According to an embodiment of the present disclosure, the AP sets another bit (e.g., the sensing measurement report identification bit (Measurement Report)) in the sensing measurement parameter information field (e.g., Table 2) to "1", indicating that the AP can receive the NDP sensing measurement report in the responder to responder, in which the sensing measurement report request frame can be initiated by the AP or the sensing measurement report can be directly initiated by the responder; or the AP sets it to "0", indicating that it does not receive the sensing measurement report.

According to an embodiment of the present disclosure, the AP may also include other identification bits in the sensing measurement setup request frame, for example, a second identification bit (STA receiver/transmitter in Table 1), which is used to indicate that the STA that establishes a sensing measurement process with the AP is the transmitter or receiver of the NDP frame in the responder to responder sensing measurement process. If the STA is the transmitter, the STA sends the NDP frame in the sensing measurement instance corresponding to the measurement setup identifier. If the STA is the receiver, the STA receives the NDP frame in the sensing measurement instance corresponding to the measurement setup identifier. According to an embodiment of the present disclosure, in one sensing measurement instance, that is, in a sensing measurement corresponding to one sensing setup identifier, there may be only one transmitter of a responder to responder sensing measurement NDP frame, but there may be multiple receivers of an NDP frame.

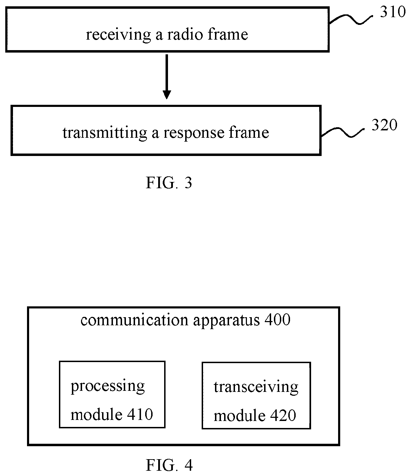

FIG. 3 is a flowchart illustrating another communication method according to an example embodiment. The communication method shown in FIG. 3 may be performed by a station device (STA).

Referring to FIG. 3, in step 310, an STA receives a radio frame from an access point device (AP), in which the radio frame may include sensing measurement parameter information set by the access point device.

Optionally, the radio frame may be a sensing measurement setup request frame.

Optionally, the radio frame may include a first identification bit, in which the first identification bit is used to indicate that the access point device initiates the sensing measurement setup between responders. Initiating the sensing measurement setup between responders may mean that the station device serving as a responder transmits a message frame (e.g., an NDP frame) for the sensing measurement. Since the AP may carry parameter information about multiple station devices in the radio frame, the "station device serving as a responder" in the initiated responder to responder sensing measurement setup can be the station device that receives the radio frame (i.e., the STA that executes the communication method shown in FIG. 3), or it can be other station devices except the station device that receives the radio frame.

Optionally, the radio frame may include a sensing receiver identification bit, in which when the sensing receiver identification bit is set to a first value, it is indicated that the access point device as a receiver receives a message frame (e.g., an NDP frame) for sensing measurement.

Optionally, the radio frame may include a sensing measurement report identification bit, in which when the sensing measurement report identification bit is set to a second value, it is indicated that the access point device receives a sensing measurement report; and when the sensing measurement report identification bit is set to a third value, it is indicated that the access point device does not receive a sensing measurement report.

Optionally, the radio frame may include a second identification bit, in which the second identification bit is used to indicate whether the station device is a transmitter or a receiver in the sensing measurement process. Since the AP may carry parameter information about multiple station devices in the radio frame, the radio frame may include multiple second identification bits, which can not only indicate whether the station device receiving the radio frame (i.e., the STA that executes the communication method shown in FIG. 3) is a transmitter or a receiver, but also indicate whether other station devices are transmitters or receivers.

Optionally, the radio frame may include a sensing measurement setup identifier. For example, when the station device is the transmitter (for example, the second identification bit indicates the station device as the transmitter), it is indicated that in the sensing measurement instance corresponding to the sensing measurement setup identifier, the station device sends a message frame for sensing measurement. For example, when the station device is a receiver (for example, the second identification bit indicates the station device as a transmitter), it is indicated that in a sensing measurement instance corresponding to the sensing measurement setup identifier, the station device receives a message frame for sensing measurement.

The radio frame, sensing measurement parameter information, the first identification bit, the sensing receiver identification bit, the sensing measurement report identification bit, the second identification bit, and the sensing measurement setup identifier have been specifically described above with reference to various embodiments and Tables 1 and 2. Therefore, for the sake of brevity, repeated descriptions are omitted here.

In step 320, the STA transmits a response frame based on the radio frame. Optionally, when the radio frame received by the STA is a sensing measurement setup request frame, the response frame sent by the STA may be a sensing measurement setup response frame. For example, the STA may parse the radio frame to obtain the sensing measurement parameter information set by the AP, and may indicate in a reply response frame whether to accept such sensing measurement parameter information. When the STA accepts the sensing measurement parameter information in the radio frame, "accept" can be directly marked in the response frame; and when the STA does not accept the sensing measurement parameter information in the radio frame, the sensing measurement parameter information that the STA can support can be indicated in the response frame in a manner such as Table 1 and Table 2. In this way, the AP and the STA can negotiate the sensing measurement parameter information in the sensing measurement setup process, and complete the sensing measurement setup that meets various requirements.

The communication method according to the embodiments of the present disclosure improves the signaling mechanism in the process of establishing a sensing session (for example, improves the signaling format of an AP-initiated responder to responder sensing measurement setup), making it applicable to WLAN sensing measurement.

FIG. 4 is a block diagram illustrating a communication apparatus according to an example embodiment. The communication apparatus 400 in FIG. 4 may include a processing module 410 and a transceiving module 420. In one embodiment of the present disclosure, the communication apparatus 400 shown in FIG. 4 may be applied to an access point device; and in another embodiment of the present disclosure, the communication apparatus 400 shown in FIG. 4 may be applied to a station device.

When the communication apparatus 400 shown in FIG. 4 can be applied to an access point device, the processing module 410 can be configured to: determine a radio frame, in which the radio frame includes sensing measurement parameter information set by the access point device; and the transceiving module 420 can be configured to: transmit the radio frame. That is, the communication apparatus 400 shown in FIG. 4 can execute the communication method described with reference to FIG. 2. In addition, the radio frame, sensing measurement parameter information, the first identification bit, the sensing receiver identification bit, the sensing measurement report identification bit, the second identification bit, the sensing measurement setup identifier, and the like described above with reference to various embodiments and Tables 1 and 2 can be applied here. In order to avoid redundancy, repeated descriptions are omitted here.

When the communication apparatus 400 shown in FIG. 4 can be applied to a station device, the transceiving module 420 can be configured to: receive a radio frame from an access point device, in which the radio frame includes sensing measurement parameter information set by the access point device; and the processing module 410 can be configured to: control transmitting a response frame based on the radio frame. That is, the communication apparatus 400 shown in FIG. 4 can execute the communication method described with reference to FIG. 3. In addition, the radio frame, sensing measurement parameter information, the first identification bit, the sensing receiver identification bit, the sensing measurement report identification bit, the second identification bit, the sensing measurement setup identifier, and the like described above with reference to various embodiments and Tables 1 and 2 can be applied here. In order to avoid redundancy, repeated descriptions are omitted here.

It will be understood that the communication apparatus 400 shown in FIG. 4 is merely exemplary, and the embodiments of the present disclosure are not limited thereto. For example, the communication apparatus 400 may further include other modules, such as a memory module, etc. Furthermore, various modules in the communication apparatus 400 may be combined into a more complex module, or may be divided into more separate modules.

The communication method and the communication apparatus according to the embodiments of the present disclosure improve the signaling mechanism in the process of establishing the sensing measurement, so that it can be applicable to WLAN sensing measurement.

Based on the same principle as the method provided by the embodiments of the present disclosure, an embodiment of the present disclosure further provides an electronic device, which includes a processor and a memory; in which the memory has stored therein machine-readable instructions (also referred to as "computer programs"); and the processor is used to execute the machine-readable instructions to implement the method described with reference to FIGS. 2 and 3.

An embodiment of the present disclosure further provides a computer-readable storage medium having a computer program stored thereon. When the computer program is executed by a processor, the method described with reference to FIGS. 2 and 3 is implemented.

In an example embodiment, the processor may be used for implementing or executing various exemplary logic blocks, modules, and circuits described in conjunction with the present disclosure, such as a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor may also be a combination that implements computing functions, such as a combination of one or more microprocessors, a combination of a DSP and a microprocessor, etc.

In an example embodiment, the memory may be a read only memory (ROM), a random access memory (RAM); an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store program codes in the form of instructions or data structures and may be accessed by a computer, but is not limited to this.

It should be understood that, although the steps in the flowchart of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowchart of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

While the present disclosure has been shown and described with reference to certain embodiments thereof, it will be understood by those skilled in the art that various changes in form and details may be made without departing from the scope of the present disclosure. Therefore, the scope of the present disclosure should not be limited to the embodiments, but should be defined by the appended claims and their equivalents.

## Claims

1. A communication method for a sensing measurement setup, performed by an access point device, comprising:
determining a radio frame, wherein the radio frame comprises sensing measurement parameter information set by the access point device; and
transmitting the radio frame.

2. The communication method according to claim 1, wherein the radio frame comprises a first identification bit, wherein the first identification bit indicates that the access point device initiates the sensing measurement setup between responders, wherein initiating the sensing measurement setup between responders means that a station device serving as a responder transmits a message frame for a sensing measurement.

3. The communication method according to claim 1, wherein the radio frame comprises a sensing receiver identification bit, and
in a case that the sensing receiver identification bit is set to a first value, indicating the access point device as a receiver receiving a message frame for a sensing measurement.

4. The communication method according to claim 1, wherein the radio frame comprises a sensing measurement report identification bit, and
in a case that the sensing measurement report identification bit is set to a second value, indicating that the access point device receives a sensing measurement report; in a case that the sensing measurement report identification bit is set to a third value, indicating that the access point device dose not receive a sensing measurement report.

5. The communication method according to claim 1, wherein the radio frame comprises a second identification bit, and the second identification bit indicates whether a station device is a transmitter or a receiver in a sensing measurement procedure.

6. The communication method according to claim 1 or 5, wherein the radio frame comprises a sensing measurement setup identifier, and
in a case that a station device is a transmitter, indicating that the station device transmits a message frame for a sensing measurement during a sensing measurement instance corresponding to the sensing measurement setup identifier;
in a case that a station device is a receiver, indicating that the station device receives a message frame for a sensing measurement during a sensing measurement instance corresponding to the sensing measurement setup identifier.

7. The communication method according to claim 1, wherein the radio frame is a sensing measurement setup request frame.

8. A communication method for a sensing measurement setup, performed by a station device, comprising:
receiving a radio frame from an access point device, wherein the radio frame comprises sensing measurement parameter information set by the access point device;
transmitting a response frame based on the radio frame.

9. The communication method according to claim 8, wherein the radio frame comprises a first identification bit, wherein the first identification bit is used to indicate that the access point device initiates the sensing measurement setup between responders, wherein initiating the sensing measurement setup between responders means that the station device serving as a responder transmits a message frame for a sensing measurement.

10. The communication method according to claim 8, wherein the radio frame comprises a sensing receiver identification bit,
in a case that the sensing receiver identification bit is set to a first value, indicating the access point device as a receiver receiving a message frame for a sensing measurement.

11. The communication method according to claim 8, wherein the radio frame comprises a sensing measurement report identification bit,
in a case that the sensing measurement report identification bit is set to a second value, indicating that the access point device receives a sensing measurement report; in a case that the sensing measurement report identification bit is set to a third value, indicating that the access point device dose not receive a sensing measurement report.

12. The communication method according to claim 8, wherein the radio frame comprises a second identification bit, and the second identification bit is used to indicate whether a station device is a transmitter or a receiver in a sensing measurement procedure.

13. The communication method according to claim 8 or 12, wherein the radio frame comprises a sensing measurement setup identifier, and
in a case that a station device is a transmitter, indicating that the station device transmits a message frame for a sensing measurement during a sensing measurement instance corresponding to the sensing measurement setup identifier;
in a case that a station device is a receiver, indicating that the station device receives a message frame for a sensing measurement during a sensing measurement instance corresponding to the sensing measurement setup identifier.

14. The communication method according to claim 8, wherein the radio frame is a sensing measurement setup request frame.

15. A communication apparatus, applied to an access point device, comprising:
a processing module, configured to determine a radio frame, wherein the radio frame comprises sensing measurement parameter information set by the access point device;
a transceiving module, configured to transmit the radio frame.

16. A communication apparatus, applied to a station device, comprising:
a transceiving module, configured to receive a radio frame from an access point device, wherein the radio frame comprises sensing measurement parameter information set by the access point device;
a processing module, configured to control transmitting a response frame based on the radio frame.

17. An electronic apparatus, comprising a memory, a processor, and a computer program stored on the memory and runnable on the processor, wherein the processor executes the computer program to implement a method according to any one of claims 1 to 7 or any one of claims 8 to 14.

18. A computer-readable storage medium, wherein a computer program is stored on the computer-readable storage medium, and when the computer program is executed by a processor, a method according to any one of claims 1 to 7 or any one of claims 8 to 14 is implemented.
